# EUROPÄISCHE PATENTSCHRIFT

(11) **EP 0 668 399 B1**
(45) Veröffentlichungstag und Bekanntmachung des Hinweises auf die Patenterteilung: **13.11.2002**
(21) Anmeldenummer: 95102233.4
(22) Anmeldetag: 17.02.1995
(51) Int. Cl.: E01C 5/06

(54) **Plattenförmiger Pflasterstein aus Betonwerkstoff**
Slab shaped paving element made of concrete
Elément de pavage en béton

(30) Priorität: 22.02.1994 DE 4405535
(43) Veröffentlichungstag der Anmeldung: 23.08.1995
(73) Patentinhaber: Geiger, Peter, 92318 Neumarkt (DE)
(72) Erfinder: Geiger, Peter, 92318 Neumarkt (DE)

(56) Entgegenhaltungen:
- EP-A- 0 015 426
- EP-A- 0 212 036
- DE-A- 4 112 819
- DE-U- 7 308 326

## Beschreibung

Die Erfindung betrifft einen plattenförmigen Pflasterstein aus Betonwerkstoff mit einer ebenen Oberfläche und quer zur Oberfläche sich erstreckende erste und zweite Seitenflächen, der in zwei einander gegenüberliegenden ersten Seitenflächen im Querschnitt symmetrisch trapezförmige Einziehungen aufweist,wobei die Einziehungen an den aussenseitigen Enden neben den Schrägflächen durch bis zu den Eckbereichen sich erstreckende Abschnitte stumpfwinkelig begrenzt sind und die die Einziehungen und die Abschnitte aufweisenden ersten Seitenflächen mit einer geringeren Länge als die quer dazu sich erstreckenden zweiten Seitenflächen ausgebildet und im Pflasterstein Lochungen angeordnet sind.

Nach der DE-41 12 819 A1 ist ein Pflastersteinsystem mit H-Verbundsteinen mit in zwei einander gegenüberliegenden Seitenflächen trapezförmigen Einziehungen und zwei zwischen diesen ausgeformten Lochungen für Bewuchs bekannt. Durch die beiden Lochungen ist der Pflasterstein bei Befahrvorgängen in besonderer Weise bruchgefährdet. Es ist versucht worden durch Anordnung von halbhohen Stegen in den Bereichen der Lochungen eine Verstärkung des Pflastersteins zu erreichen, die jedoch durch Verringerung der lichten Weiten der Lochungen den Bewuchs quantitativ und qualitativ stören.

Es ist Aufgabe der Erfindung einen Pflasterstein obiger Art zu schaffen, der eine hohe Tragfähigkeit und bruchsichere Befahrbarkeit aufweist sowie einen ungehinderten Bewuchs ermöglicht.

Erfindungsgemäß ist diese Aufgabe dadurch gelöst, daß mittig im Abstand symmetrisch zwischen den Kopfseiten der Einziehungen und mit Abstand zu den zweiten Seitenflächen unter Beibehaltung der Querschnittsform und Querschnittsgröße eine einzige, den Pflasterstein frei durchsetzende Lochung mit rechteckigem Querschnitt mit einer Länge von im wesentlichen 110 mm und einer Breite von im wesentlichen 88 mm ausgebildet ist und daß die die Einziehungen und Abschnitte aufweisenden ersten Seitenflächen des Pflastersteins eine Länge von im wesentlichen 198 mm und die quer dazu sich erstreckenden zweiten Seitenflächen eine Breite von im wesentlichen 219 mm aufweisen. Auf diese Weise ist ein Pflasterstein geschaffen, der im Verlegemuster mit benachbarten gleichen Pflastersteinen verzahnbar ist, durch seine maßliche Ausgestaltung eine hohe Tragfähigkeit zu befahrbaren Verlegungen aufweist und durch die Ausbildung der Lochung und Auffüllen derselben mit beliebigen Materialien, z.B. Humuserde, Bewuchsflächen bzw. unterschiedliche Effekte zu bilden erlaubt. Die gegenüber der Länge des Pflastersteins größer gewählte Breite desselben sichert dabei ausreichend große Lochungen und stabile Begrenzungsflächen zu. Die Eckbereiche der jeweiligen Lochung können durch rechtwinkelig zusammenstoßende Begrenzungsflächen oder zweckmäßig durch bogenförmige, z.B. kreisbogenförmige Abschnitte begrenzt sein.

In weiterer Ausbildung des Pflastersteins ist vorgesehen, diesen als Vollstein auszubilden. Durch beliebig wählbare Kombinationen von als Vollstein oder Lochstein gebildeten Pflastersteinen ist die Möglichkeit gegeben, die Verlegeflächen den zu erwartenden Belastungen anzupassen bzw. durch Begrünen der Lochungen Effekte zu erreichen. Fernerhin ist noch vorgesehen, den Pflasterstein als Halbstein mit im Bereich der Einziehungen auf halber Länge der ersten Seitenflächen angeordneten Trennflächen auszubilden. Vermittels der Halbsteine können die, z.B. bei im Läuferverband verlegten Pflastersteinen die verbleibenden Öffnungen in den Endbereichen unter Beibehaltung des Verlegemusters geschlossen werden.

Schließlich ist noch vorgesehen, an sich bekannte H-förmige Vollsteine gemeinsam mit Einziehungen und diese begrenzenden Abschnitte aufweisenden Pflastersteinen, deren die Einziehungen und Abschnitte aufweisenden Seitenflächen gleiche Längen jedoch quer dazu mit geringeren Breiten aufweisenden Seitenflächen versehen sind, zu einem Verlegmuster im Breitenverhältnis 5:7 miteinander zusammenzufügen.

Wie die Erfindung ausgeführt sein kann, läßt das mit den für diese wesentlichen Merkmale in den Zeichnungen dargestellte Ausführungsbeispiel erkennen. Es zeigen:
- Fig. 1: einen Pflasterstein entsprechend einer Ausführungsform, in Draufsicht,
- Fig. 2: eine Anzahl als Voll- und Lochsteine ausgebildete Pflastersteine zu einem Verlegemuster zusammengefügt, in Draufsicht,
- Fig. 3: mehrere mit H-Pflastersteinen bekannter Ausführung zu einem Verlegemuster zusammengefügte Pflastersteine, in Draufsicht und
- Fig. 4: einen Verlegemuster mit verschiedenen Pflastersteinausführungen, verkleinert, in Draufsicht.

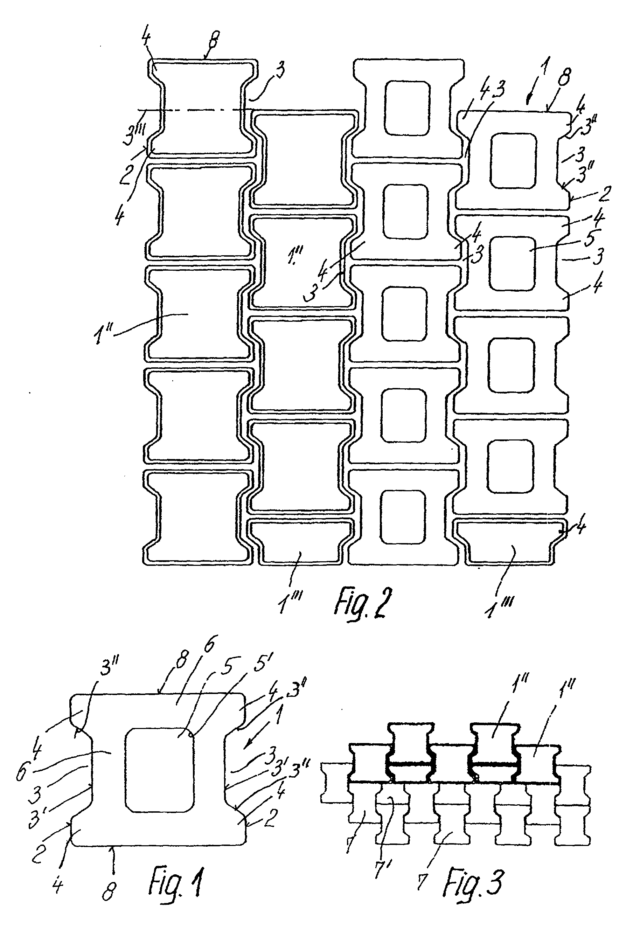

Der in Fig. 1 gezeigte Pflasterstein 1 ist als Betonformstein ausgeführt. In zwei einander gegenüberliegenden ersten Seitenflächen 2 weist der Pflasterstein 1 trapezförmige Einziehungen 3 auf, die an ihren Schrägflächen 3'' durch Abschnitte 4 stumpfwinkelig begrenzt sind. Die Seitenflächen 2 stehen mit quer zu diesen sich ersteckenden zweiten Seitenflächen 8 in Verbindung, wobei die Seitenflächen 2 und 8 als ebene Flächen ausgeführt sind. Die die Einziehungen 3 und Abschnitte 4 aufweisenden ersten Seitenflächen 2 sind mit einer geringeren Länge ausgeführt als die quer dazu sich erstreckenden zweiten Seitenflächen 8. Mittig im Abstand zu den Kopfseiten 3' der Einziehungen 3 und zu den Seitenflächen 8 weist der Pflasterstein 1 eine beim Ausführungsbeispiel, z.B. rechteckförmige Lochung 5 auf, die in den Eckbereichen durch kreisbogenförmige Abschnitte 5' begrenzt ist. Die Lochung 5 ist beim Ausführungsbeispiel im Querschnitt so gewählt, daß umlaufend etwa gleichbreite Randstreifen 6 gebildet sind, die die Tragfähigkeit des Pflastersteins sichern. Die Lochung 5 ist mit einer Länge von im wesentlichen 110 mm und einer Breite von 88 mm ausgebildet. Sie erlaubt nach dem Verlegen des Pflastersteins 1 ein Auffüllen mit beliebigen Materialien, z.B. Sand oder Humuserde, die begrünt werden kann. Die die Einziehungen 3 und die Abschnitte 4 aufweisenden ersten Seitenflächen 2 sind mit einer Länge von 198 mm und die quer dazu sich erstreckenden zweiten Seitenflächen 8 mit einer Breite von im wesentlichen 219 mm ausgebildet.

Wie die Fig. 2 erkennen läßt, greifen im Verlegemuster benachbarte Pflastersteine 1 mit ihren Abschnitten 4 in Einziehungen 3 ein und ergeben dadurch eine Verzahnung, die einen festen Zusammenhalt der Pflastersteine 1 im Verlegemuster gewährleistet. Beim Ausführungsbeispiel der Fig. 2 sind weiter mit Lochungen 5 versehene Pflastersteine 1 mit als Vollsteine ausgebildeten Pflastersteinen 1'' zusammengefügt, wobei die Außenabmessungen beider Pflastersteinarten gleich sind.

Die verbleibenden Abstände im Bereich der Reihenenden können durch Halbsteine 1''' verschlossen werden, die zweckmäßig durch Vollsteine gebildet sind, die im Mittelbereich der Einziehungen 3 Trennungsflächen 3''' aufweisen.

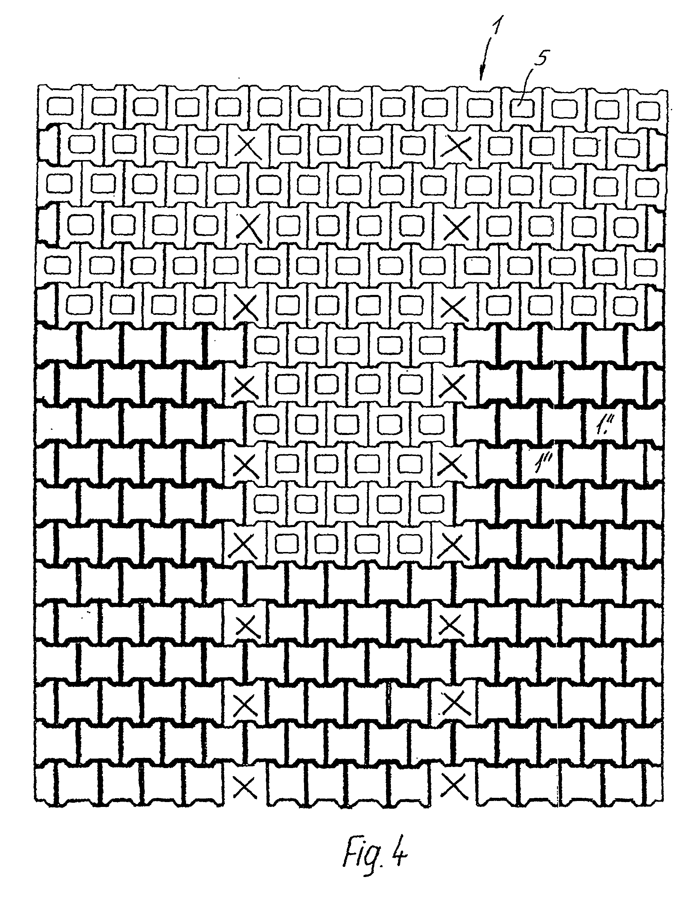

Beim Ausführungsbeispiel der Fig. 4 sind eine Vielzahl mit Lochungen versehene Pflastersteine 1 mit Pflastersteinen 1'' ohne Lochungen zu einem Verlegemuster zusammengefügt. Die Verlegung der Pflastersteine 1, 1'' kann maschinell erfolgen, bevorzugt zu Spur-Wegsteinflächen, z.B. bei Flurbereinigungen od.dgl.

In Fig. 3 sind Vollsteine 1'' und 1''' mit H-Pflastersteinen 7 und 7' bekannter Ausführung verlegt. Es zeigt sich, daß bei gleichen Längen der Pflastersteine 1'' und 7 auf einer Breite von sieben Pflastersteinen 7, 7' ein lückenloser Anschluß mit fünf Pflastersteinen 1'' oder 1 aneinander möglich ist.

## Patentansprüche

1. Plattenförmiger Pflasterstein (1) aus Betonwerkstoff mit einer ebenen Oberfläche und quer zur Oberfläche sich erstreckende erste und zweite Seitenflächen (2, 8), der in zwei einander gegenüberliegenden ersten Seitenflächen (2) im Querschnitt symmetrisch trapezförmige Einziehungen (3) aufweist, wobei die Einziehungen (3) an den außenseitigen Enden neben den Schrägflächen (3'') durch bis zu den Eckbereichen sich erstreckende Abschnitte (4) stumpfwinkelig begrenzt sind und die die Einziehungen (3) und die Abschnitte (4) aufweisenden ersten Seitenflächen (2) mit einer geringeren Länge als die quer dazu sich erstreckenden zweiten Seitenflächen (8) ausgebildet und im Pflasterstein Lochungen angeordnet sind, **dadurch gekennzeichnet, daß** mittig im Abstand symmetrisch zwischen den Kopfseiten (3') der Einziehungen (3) und mit Abstand zu den zweiten Seitenflächen (8) unter Beibehaltung der Querschnittsform und Querschnittsgröße eine einzige, den Pflasterstein (1) frei durchsetzende Lochung (5) mit rechteckigem Querschnitt mit einer Länge von im wesentlichen 110 mm und einer Breite von im wesentlichen 88 mm ausgebildet ist und daß die die Einziehungen (3) und Abschnitte (4) aufweisenden ersten Seitenflächen (2) des Pflastersteins (1) eine Länge von im wesentlichen 198 mm und die quer dazu sich erstreckenden zweiten Seitenflächen (8) eine Breite von im wesentlichen 219 mm aufweisen.

2. Plattenförmiger Pflasterstein (1'') aus Betonwerkstoff mit einem eine ebene Oberfläche und quer zur Oberfläche sich erstreckende erste und zweite Seitenflächen (2, 8), der in zwei einander gegenüberliegenden ersten Seitenflächen (2) im Querschnitt symmetrisch trapezförmige Einziehungen (3) aufweist, wobei die Einziehungen (3) außenseitig neben den Schrägflächen (3'') durch bis zu den Eckbereichen sich erstreckende Abschnitte (4) stumpfwinkelig begrenzt sind und die die Einziehungen (3) und die Abschnitte (4) aufweisenden ersten Seitenflächen (2) mit einer geringeren Länge als die quer dazu sich erstreckenden zweiten Seitenflächen (8) ausgebildet sind, **dadurch gekennzeichnet, daß** die die Einziehungen (3) und Abschnitte (4) aufweisenden ersten Seitenflächen (2) des Pflastersteins (1'') eine Länge von im wesentlichen 198 mm und die quer dazu sich erstreckenden zweiten Seitenflächen (8) eine Breite von im wesentlichen 219 mm aufweisen und daß der Pflasterstein (1'') als Vollstein ausgebildet ist.

3. Plattenförmiger Pflasterstein nach Anspruch 2, **dadurch gekennzeichnet, daß** im Bereich der Einziehungen (3) auf halber Länge der ersten Seitenflächen (2) Trennflächen (3''') zur Schaffung von Halbsteinen (1''') ausgebildet sind.

4. Plattenförmiger Pflasterstein nach Anspruch 1, 2 und 3, **dadurch gekennzeichnet, daß** an sich bekannte H-förmige Vollsteine (7) gleicher Länge jedoch geringerer Breite und Halbsteine (7') derselben bei Verlegung mit plattenförmigen Pflastersteinen (1, 1'', 1''') zu einem Verlegemuster im Breitenverhältnis 5:7 miteinander zusammenfügbar sind.

## Claims

1. Tile-like paving stone (1), formed from concrete material and having a planar surface and first and second side faces (2, 8), which extend transversely relative to the surface, said stone including recesses (3) of a symmetrically trapezoidal cross-section in two oppositely situated first side faces (2), the recesses (3) being defined in an obtuse-angled manner at the external ends adjacent the inclined faces (3'') by portions (4) which extend to the corner regions, and the first side faces (2), which include the recesses (3) and the portions (4), having a shorter length than the second side faces (8), which extend transversely thereto, and perforations being provided in the paving stone, **characterised in that** a single perforation (5), which freely extends through the paving stone (1) and has a rectangular cross-section with a length of substantially 110 mm and a width of substantially 88 mm, is provided centrally at a spacing symmetrically between the top sides (3') of the recesses (3) and at a spacing from the second side faces (8), so as to retain the cross-sectional form and cross-sectional size, and **in that** the first side faces (2) of the paving stone (1), which include the recesses (3) and portions (4), have a length of substantially 198 mm, and the second side faces (8), which extend transversely thereto, have a width of substantially 219 mm.

2. Tile-like paving stone (1''), formed from concrete material and having a planar surface and first and second side faces (2, 8), which extend transversely relative to the surface, said stone including recesses (3) of a symmetrically trapezoidal cross-section in two oppositely situated first side faces (2), the recesses (3) being defined in an obtuse-angled manner externally adjacent the inclined faces (3") by portions (4) which extend to the comer regions, and the first side faces (2), which include the recesses (3) and the portions (4), having a shorter length than the second side faces (8), which extend transversely thereto, **characterised in that** the first side faces (2) of the paving stone (1''), which include the recesses (3) and portions (4), have a length of substantially 198 mm, and the second side faces (8), which extend transversely thereto, have a width of substantially 219 mm, and **in that** the paving stone (1'') is configured as a full-size stone.

3. Paving stone according to claim 2, **characterised in that** separation surfaces (3''') are provided in the region of the recesses (3) halfway along the first side faces (2) in order to create half-stones (1''').

4. Tile-like paving stone according to claims 1, 2 and 3, **characterised in that** H-shaped full-size stones (7), which are known per se and are of identical length, but of smaller width, and half-stones (7') thereof can be joined together to form a laying pattern in the width ratio 5:7 when tile-like paving stones (1, 1'', 1''') are laid.

## Revendications

1. Pavé en forme de plaque (1) en béton comportant une surface supérieure plane, ainsi que des premières et secondes surfaces latérales (2, 8) s'étendant transversalement à la surface supérieure, lequel présente dans deux premières surfaces latérales (2) se faisant face des retraits (3) trapézoïdaux de section transversale symétrique, les retraits (3) étant délimités à angle obtus aux extrémités extérieures près des surfaces obliques (3") par des parties (4) s'étendant jusqu'aux zones de coin et les premières surfaces latérales (2) présentant les retraits (3) et les parties (4) étant réalisées avec une longueur inférieure à celle des secondes surfaces latérales (8) s'étendant transversalement à celles-ci et des perforations étant ménagées dans le pavé,
**caractérisé en ce qu'**au centre à distance symétrique entre les côtés de tête (3') des retraits (3) et à distance des deux surfaces latérales (8) tout en respectant la forme et la taille de la section transversale, il est réalisé une perforation (5) unique, traversant librement le pavé (1), ayant une section transversale rectangulaire d'une longueur essentiellement de 110 mm et une largeur essentiellement de 88 mm, et **en ce que** les premières surfaces latérales (2) du pavé (1), présentant les retraits (3) et les parties (4), présentent une longueur essentiellement de 198 mm, et les secondes surfaces latérales (8) s'étendant transversalement à celles-ci présentent une largeur essentiellement de 219 mm.

2. Pavé en forme de plaque (1'') en béton comportant une surface supérieure plane, ainsi que des premières et secondes surfaces latérales (2, 8) s'étendant transversalement à la surface supérieure, lequel présente dans deux premières surfaces latérales (2) se faisant face des retraits (3) trapézoïdaux de section transversale symétrique, les retraits (3) étant délimités à angle obtus côté extérieur près des surfaces obliques (3") par des parties (4) s'étendant jusqu'aux zones de coin et les premières surfaces latérales (2) présentant les retraits (3) et les parties (4) étant réalisées avec une longueur inférieure à celle des secondes surfaces latérales (8) s'étendant transversalement à celles-ci,
**caractérisé en ce que** les premières surfaces latérales (2) du pavé (1"), présentant les retraits (3) et les parties (4) présentent une longueur essentiellement de 198 mm, et les secondes surfaces latérales (8) s'étendant transversalement à celles-ci présentent une largeur essentiellement de 219 mm, et **en ce que** le pavé (1") est réalisé en tant que pavé plein.

3. Pavé en forme de plaque selon la revendication 2,
**caractérisé en ce que**, dans la zone des retraits (3) à mi-longueur des premières surfaces latérales (2), des surfaces de séparation (3''') sont réalisées pour créer des demi-pavés (1''').

4. Pavé en forme de plaque selon les revendications 1, 2 et 3,
**caractérisé en ce que**, lors de la pose de pavés en forme de plaque (1, 1", 1'''), des pavés pleins en forme de H (7) connus en soi, de même longueur mais de largeur inférieure, et des demi-pavés (7') de ceux-ci peuvent être assemblés entre eux pour former un schéma de pose ayant un rapport de largeur de 5 : 7.
